# EUROPÄISCHE PATENTANMELDUNG

(11) **EP 4 053 449 A1**
(43) Veröffentlichungstag der Anmeldung: **07.09.2022**
(21) Anmeldenummer: 22158774.4
(22) Anmeldetag: 25.02.2022
(51) Int. Cl.: F21V 8/00

(54) **FLEXIBLES FLÄCHENLICHT SOWIE TEXTILE FLÄCHENKONSTRUKTION ODER KLEIDUNGSSTÜCK MIT EINEM FLEXIBLEN FLÄCHENLICHT**

(30) Priorität: 04.03.2021 DE 102021202098
(71) Anmelder: ITP GmbH - Gesellschaft Für Intelligente Textile Produkte, 99423 Weimar (DE)
(72) Erfinder: RICHTER, Klaus, 99425 Weimar (DE); HUSCHKE, Dirk, 99448 Rittersdorf (DE); BÖHME, Luise, 07745 Jena (DE)
(74) Vertreter: Liedtke & Partner Patentanwälte

(57) **Zusammenfassung**

Die Erfindung betrifft ein flexibles, zur Anordnung auf einem flexiblen Material eingerichtetes Flächenlicht (10) umfassend einen flexiblen Lichtleitkörper (1), der über einer Grundfläche (1.3) ausgedehnt ist, sowie einen darüber angeordneten flexiblen, optisch diffus streuenden Diffusorkörper (2) mit einer Abstrahlfläche (2.1). Der Lichtleitkörper (1) ist zur Lichtleitung von mindestens einem Lichteintritt (1.1) zu einem Lichtleiteraustritt (1.4) eingerichtet, der zwischen der Grundfläche (1.3) und der Abstrahlfläche (2.1) ausgedehnt ist. Der Diffusorkörper (2) ist zur Aufnahme und zur diffusen Streuung des aus dem Lichtleiteraustritt (1.4) austretenden Lichtes und zur Abgabe des diffus gestreuten Lichtes über die Abstrahlfläche (2.1) eingerichtet. Der Lichtleiteraustritt (1.4) ist austrittsseitig mit einer optisch mindestens teilweise transparenten Mantelschicht (1.5) versehen. Alternativ ist der Lichtleitkörper (1) mit einer austrittsseitig und/oder auf dessen Grundfläche (1.3) angeordneten Maske (1.6) versehen. Die Mantelschicht (1.5) und/oder die mindestens eine Maske (1.6) ist/sind für eine Kompensation der entlang der Lichtausbreitungsrichtung (L) im Lichtleitkörper (1) bewirkten Schwächung des an dem mindestens einen Lichteintritt (1.1) eingekoppelten Lichtes eingerichtet. Die Erfindung betrifft ferner eine textile Flächenkonstruktion sowie ein Kleidungsstück mit einem solchen Flächenlicht (10).

## Beschreibung

Die Erfindung betrifft ein flexibles Flächenlicht, das zur Anordnung auf einem flexiblen Material eingerichtet ist. Die Erfindung betrifft ferner eine textile Flächenkonstruktion, beispielsweise ein textiles Gewebe, mit einem darauf angeordneten flexiblen Flächenlicht. Darüber hinaus betrifft die Erfindung ein Kleidungsstück aus mindestens bereichsweise flexiblem Material mit einem darauf angeordneten flexiblen Flächenlicht.

Flexible retroreflektierende Materialien werden auf Kleidungsstücken oder textilen Geweben angebracht, um visuelle, die Aufmerksamkeit erregende Effekte zu erzielen. Beispielsweise werden derartige Materialien auf Sicherheitswesten oder auf Kleidungsstücken von Einsatz- und Sicherheitskräften oder auf Sport- und Outdoor-Kleidung angeordnet, um die Sichtbarkeit auch bei schlechten Sichtverhältnissen zu erhöhen. Auch ein Einsatz zur Erzielung modischer oder gestalterischer Effekte ist bekannt. Mit retroreflektierenden Materialien kann unter einer äußeren Beleuchtung ein flächiger Leuchteindruck erzeugt werden.

Ferner ist bekannt, Kleidungsstücke oder textile Gewebe mit aktiv betriebenen Leuchtmitteln auszustatten, die eine Sichtbarkeit auch dann gewährleisten, wenn eine für Retroreflexion nur unzureichende äußere Beleuchtung vorhanden ist. Beispielsweise sind Leuchtdioden (LEDs) bekannt, die in ein textiles Gewebe eingewirkt oder darauf aufgesetzt sind. Derartige Leuchtmittel weisen eine im Vergleich zur Gesamtoberfläche des textilen Gewebes beziehungsweise des Kleidungsstücks nur sehr geringe Leuchtfläche auf und erzeugen eine näherungsweise punktförmige Leuchtdichte.

Es ist auch bekannt, aktiv betriebene Leuchtmittel mit retroreflektierenden und/oder diffus streuenden Materialien zu koppeln, um einen flächigen Leuchteindruck zu erzeugen. Aus dem Stand der Technik bekannte Vorrichtungen weisen jedoch eine im Verhältnis zur Gesamtoberfläche des textilen Gewebes oder des Kleidungsstücks nur geringe leuchtende Oberfläche auf und/oder beschränken die Flexibilität des textilen Gewebes oder des Kleidungsstücks. Dadurch wird die Erzeugung eines flächigen Leuchteindrucks beschränkt.

Das Dokument US 2011/0134623 A1 beschreibt ein optisches Gerät mit einer Lichtquelle und einem optischen Element. Das optische Element umfasst einen Lichtleiter und eine darauf angeordnete viskoelastische Schicht. Von der Lichtquelle emittiertes Licht wird in den Lichtleiter eingekoppelt und von diesem durch interne Totalreflexion geleitet. Die viskoelastische Schicht ist so ausgebildet, dass darüber ein bestimmter Anteil des in den Lichtleiter eingekoppelten Lichtes, beispielsweise mindestens 50 Prozent oder weniger als 10 Prozent, aus dem Lichtleiter ausgekoppelt wird. Das optische Gerät kann für Lichtzeichen, Markierungen, Anzeigegeräte oder Tastaturelemente verwendet werden.

Das Dokument DE 692 17 177 T2 beschreibt eine Oberflächenlichtquellenvorrichtung zur Verwendung als Hintergrundbeleuchtung für eine Flüssigkristallanzeige.

Das Dokument DE 197 40 313 C2 beschreibt eine Lichtleiteranordnung mit einer Lichtquelle, mit einem Reflektor zum Bündeln der Strahlung der Lichtquelle, mit einem Lichtleiter und mit einer Einkoppeloptik zum Einkoppeln des Lichtstrahlenbündels in das Lichteintrittsende des Lichtleiters. Der Reflektor ist derart ausgebildet, dass er über die gesamte Einkoppelfläche am Lichteintrittsende des Lichtleiters eine gleichmäßige räumliche Lichtstärkeverteilung erzeugt.

Das Dokument DE 199 42 513 A1 beschreibt einen Leuchtenkörper für durchleuchtungsfähige Bilder, wie Filmbetrachter, Hinterbildleuchte, Zeichnungsdurchleuchter oder Lichtschild, mit einer lichtdurchlässigen, im Wesentlichen planparallelen Platte, in die das Licht einer oder mehrerer Lichtquellen in Randnähe eingekoppelt wird und in der sich das Licht unter Vielfachreflexion an Ober- und Unterseite der Platte verteilt, wobei die Ober- und/oder Unterseite eine lichtbrechende rasterförmige Oberflächenstruktur zum stellenweise definierten Lichtaustritt aufweist, die sich mit zunehmendem Abstand von der Einkoppelstelle vergrößert, wobei oberhalb der Plattenoberseite eine mit einer Streuschicht versehene Leuchtfläche befestigt ist, die Lichtquelle zur Einkoppelstelle beabstandet ist und ein lichtleitendes Medium zwischen Einkoppelstelle und Lichtquelle angeordnet ist.

Das Dokument US 2013/0083260 A1 beschreibt eine Lichtquellenvorrichtung umfassend eine Lichtleitplatte mit einer ersten internen Reflexionsebene und einer zweiten, gegenüberliegend angeordneten internen Reflexionsebene, eine erste Lichtquelle, welche ein Inneres der Lichtleitplatte mit einem ersten Beleuchtungslicht seitlich bestrahlt und ein Streuelement, das gegenüberliegend der ersten internen Reflexionsebene oder der zweiten internen Reflexionsebene angeordnet und zur Lichtstreuung eingerichtet ist. Eine Mehrzahl von Durchlassbereichen, die einen Durchtritt des ersten Beleuchtungslichts und eine von der Lichtleitplatte wegführende Lichtabstrahlung ermöglichen, sind auf der ersten oder auf der zweiten internen Reflexionsebene angeordnet. Das Streuelement ist gegenüberliegend der Mehrzahl von Durchlassbereichen angeordnet und streut das durch diese Durchlassbereiche hindurchtretende Licht.

Der Erfindung liegt die Aufgabe zu Grunde, ein flexibles Flächenlicht anzugeben, das für eine Anordnung auf einem flexiblen Material eingerichtet ist und das einen verbesserten, visuell wahrnehmbaren flächigen Leuchteindruck mindestens eines Bereichs dieses flexiblen Materials ermöglicht. Diese Aufgabe wird erfindungsgemäß durch ein flexibles Flächenlicht mit den Merkmalen des Anspruchs 1 gelöst.

Ferner liegt der Erfindung die Aufgabe zu Grunde, eine textile Flächenkonstruktion, beispielsweise ein textiles Gewebe, ein Vlies, ein Gewirk oder ein Gestrick sowie ein Kleidungsstück anzugeben, das mit einem solchen flexiblen Flächenlicht versehen ist. Diese Aufgabe wird erfindungsgemäß durch eine textile Flächenkonstruktion mit den Merkmalen des Anspruchs 14 beziehungsweise durch ein Kleidungsstück mit den Merkmalen des Anspruchs 15 gelöst.

Vorteilhafte Ausgestaltungen der Erfindung sind Gegenstand der Unteransprüche.

Ein flexibles, zur Anordnung auf einem flexiblen Material eingerichtetes Flächenlicht umfasst einen flexiblen Lichtleitkörper, der über einer Grundfläche ausgedehnt ist. Die Grundfläche erstreckt sich entlang einer Lichtausbreitungsrichtung und entlang einer Querrichtung, die nicht parallel zur Lichtausbreitungsrichtung ist. Die äußere Oberfläche der Grundfläche ist zur Befestigung an einem flexiblen Material eingerichtet, beispielsweise zum Verkleben oder zum Verschweißen.

Das Flächenlicht umfasst ferner einen über dem flexiblen Lichtleitkörper angeordneten flexiblen, optisch diffus streuenden Diffusorkörper mit einer Abstrahlfläche. Der Lichtleitkörper ist vom Diffusorkörper getrennt ausgebildet, kann jedoch mit diesem, vorzugsweise adhäsiv, verbunden sein. Entsprechend ihrer unterschiedlichen optischen Wirkung kann es erforderlich sein, für unterschiedliche Anwendungen eine Komponente (beispielsweise den Diffusorkörper) anzupassen (beispielsweise durch Wahl des Materials und/oder der Dicke), während die andere Komponente (beispielsweise der Lichtleitkörper) keiner oder nur einfacher Anpassungen bedarf. Ein Vorteil der getrennten Ausbildung von Diffusorkörper und Lichtleitkörper besteht somit in einer flexibleren und einfacheren Fertigung des Flächenlichtes.

Der Lichtleitkörper ist zur Leitung von Licht von mindestens einem entlang der Querrichtung erstreckten Lichteintritt nach einem Lichtleiteraustritt eingerichtet, der sich flächig zwischen der Grundfläche und der Abstrahlfläche erstreckt. Bevorzugt ist der Lichteintritt plan und in einem Winkel von zwischen 80 Grad und 100 Grad relativ zur Grundfläche, besonders bevorzugt näherungsweise senkrecht zur Grundfläche ausgerichtet ausgebildet. Der Lichtleiteraustritt ist bevorzugt plan und in einem Winkel von zwischen -10 Grad bis 10 Grad relativ zur Grundfläche, besonders bevorzugt parallel zur Grundfläche ausgebildet.

In einer nachfolgend noch genauer beschriebenen bevorzugten Ausführungsform ist der Lichtleitkörper mit mindestens einem aktiv leuchtenden Leuchtmittel baulich verbunden, welches Licht über den mindestens einen Lichteintritt in den Lichtleitkörper einspeist. Es sind aber auch Ausführungsformen möglich, bei denen der Lichtleitkörper von Leuchtmitteln getrennt, jedoch mit solchen Leuchtmitteln verbindbar ausgeführt ist.

Der Diffusorkörper ist zur Aufnahme und zur diffusen Streuung des aus dem Lichtleiteraustritt austretenden Lichtes und zur Abgabe des diffus gestreuten Lichtes über die Abstrahlfläche eingerichtet.

In einer Ausführungsform ist der Lichtleiteraustritt austrittsseitig mit einer optisch mindestens teilweise transparenten Mantelschicht versehen, die für eine Kompensation der entlang der Lichtausbreitungsrichtung im Lichtleitkörper bewirkten Schwächung des an dem mindestens einen Lichteintritt eingekoppelten Lichtes eingerichtet ist. Mit anderen Worten: in einem entlang der Lichtausbreitungsrichtung erstreckten Bereich, in dem das im Lichtleitkörper auf die Lichtleiteraustrittsfläche geleitete Licht eine hohe Intensität aufweist, bewirkt die Mantelschicht eine vergleichsweise schwächere Einkopplung in den Diffusorkörper als in einem Bereich, in dem das im Lichtleitkörper auf die Lichtleiteraustrittsfläche geleitete Licht eine aufgrund der Dämpfung im Lichtleitkörper verringerte Intensität aufweist.

Dadurch wird erreicht, dass entlang der Lichtausbreitungsrichtung eine näherungsweise konstante Lichtintensität in den Diffusorkörper eingekoppelt wird und eine über der Abstrahlfläche entlang der Lichtausbreitungsrichtung besonders homogene Leuchtdichte des Flächenlichtes erreicht wird, die für die Erzielung von flächigen visuellen Effekten besonders vorteilhaft ist.

Zusätzlich oder alternativ zu der Mantelschicht auf dem Lichtleiteraustritt kann auf der zum Diffusorkörper weisenden Austrittsfläche und/oder der Grundfläche des Lichtleitkörpers eine Maske angeordnet sein, bei der auf einem Hintergrund lichtundurchlässige und/oder reflektierende Strukturelemente derart angeordnet sind, dass entlang der Lichtausbreitungsrichtung eine Schwächung des durch die Maske hindurch in den Diffusorkörper eingekoppelten Lichtes und/oder eine Schwächung des über die Grundfläche in den Lichtleitkörper zurück reflektierten Lichtes erzielt wird. Die mindestens eine Maske ist so eingerichtet, dass diese dadurch erzielte Schwächung des im Lichtleitkörper in Lichtausbreitungsrichtung geleiteten Lichtes kompensiert wird.

Beispielsweise sind bei einer auf dem Lichtleiteraustritt angeordneten Maske lichtundurchlässige Strukturelemente auf einem transparenten Hintergrund aufgebracht. Alternativ oder zusätzlich sind bei einer auf der Grundfläche angeordneten Maske reflektierende Strukturelemente auf einem nicht reflektierenden Hintergrund aufgebracht, welcher beispielsweise transparent oder lichtundurchlässig ausgebildet sein kann.

Mit anderen Worten: bei einer auf dem Lichtleiteraustritt angeordneten Maske nimmt deren Transmissivität in Lichtausbreitungsrichtung zu und bei einer auf der Grundfläche des Lichtleitkörpers angeordneten Maske nimmt deren Reflektivität in Lichtausbreitungsrichtung zu, und zwar jeweils in dem Maße, in welchem die Lichtintensität des in dem Lichtleitkörper geleiteten Lichtes geschwächt wird.

Dadurch wird erreicht, dass entlang der Lichtausbreitungsrichtung eine näherungsweise konstante Lichtintensität in den Diffusorkörper eingekoppelt wird und eine über der Abstrahlfläche entlang der Lichtausbreitungsrichtung besonders homogene Leuchtdichte des Flächenlichtes erreicht wird, die für die Erzielung von flächigen visuellen Effekten besonders vorteilhaft ist.

In einer Ausführungsform eines flexiblen Flächenlichtes sind der Lichtleitkörper aus glasklarem flexiblem Silikonmaterial und der Diffusorkörper aus diffus-trübem flexiblem Silikonmaterial gebildet. Optisch transparentes Silikonmaterial ist flexibel, kostengünstig und leicht verfügbar und weist eine im Vergleich zu anderen flexiblen Materialien besonders geringe optische Absorption auf. Dadurch ist es möglich, derartig ausgebildete Flächenlichter auch mit schwachen Leuchtmitteln zu speisen, die einen geringen Energieverbrauch aufweisen und eine geringe Verlustwärme erzeugen.

In einer Ausführungsform eines flexiblen Flächenlichtes mit einer austrittsseitig auf dem Lichtleitkörper angeordneten, mindestens teilweise transparenten Mantelschicht ist diese Mantelschicht aus einem optisch dünneren, flexiblen Material gebildet als der Lichtleitkörper, wobei das Verhältnis des Brechungsindex n2 der Mantelschicht zum Brechungsindex n1 des Lichtleitkörpers so gewählt ist, dass das aus dem Lichtleitkörper auf den Lichtleiteraustritt auftreffende Licht teilweise in den Diffusorkörper eingekoppelt wird und teilweise in den Lichtleitkörper zurück totalreflektiert wird.

Dadurch wird erreicht, dass über einen entlang der Lichtausbreitungsrichtung besonders großen Bereich Licht vom Lichtleitkörper in den Diffusorkörper eingekoppelt wird. Dadurch ist es möglich, Flächenlichter herzustellen, deren Abstrahlfläche mindestens entlang der Lichtausbreitungsrichtung besonders ausgedehnt ist und die einen verbesserten flächigen Lichteindruck ermöglichen.

In einer Ausführungsform eines flexiblen Flächenlichtes sind der Lichtleitkörper aus glasklarem Silikonmaterial, der Diffusorkörper aus diffus-trübem Silikonmaterial und die Mantelschicht aus einem Acrylmaterial gebildet. Acrylmaterial weist einen gegenüber Silikonmaterial niedrigeren Brechungsindex auf, so dass an der Mantelschicht Totalreflexion ermöglicht ist. Das Verhältnis der Brechungsindizes von Acrylmaterial und Silikonmaterial ist derart, dass Totalreflexion über einen gewissen, jedoch nicht über den gesamten Bereich von Einfallswinkeln auftritt, unter dem Lichtstrahlen im Lichtleitkörper auf die Mantelschicht des Lichtleiteraustritts auftreffen.

Es wird daher ein Teil des auftreffenden Lichtes in den Lichtleitkörper zurück totalreflektiert und mindestens teilweise entlang der Lichtausbreitungsrichtung weitergeleitet. Ein anderer Teil des auf die Mantelschicht auftreffenden Lichtes wird in den Diffusorkörper eingekoppelt, diffus gestreut und über die Abstrahlfläche abgestrahlt.

Diese Ausführungsform ermöglicht somit eine insbesondere entlang der Lichtausbreitungsrichtung besonders weit erstreckte Abstrahlfläche mit einer besonders homogenen Leuchtdichte.

In einer Ausführungsform eines flexiblen Flächenlichtes ist auf dem Lichtleiteraustritt eine Maske derart angeordnet, dass die Transmissivität vom Lichtleiteraustritt in den Diffusorkörper, das heißt: der Anteil des aus dem Lichtleitkörper auf den Lichtleiteraustritt auftreffenden Lichtes, der in den Diffusorkörper eingekoppelt wird, entlang der Lichtausbreitungsrichtung zunimmt.

In einer Ausführungsform umfasst eine derartige Maske optisch undurchlässige Strukturelemente. Bevorzugt sind die optisch undurchlässigen Strukturelemente regelmäßig angeordnet und/oder geformt.

Beispielsweise sind ausreichend kleine Strukturelemente gleicher Größe mit entlang der Lichtausbreitungsrichtung abnehmender Dichte angeordnet. Alternativ oder zusätzlich können Strukturelemente in entlang der Lichtausbreitungsrichtung abnehmender Größe regelmäßig (in gleichen Abständen) angeordnet sein.

Licht wird entlang der Lichtausbreitungsrichtung im Lichtleitkörper gedämpft. Durch diese Ausführungsform wird diese Dämpfung kompensiert, indem die auf den Lichtleiteraustritt aufgebrachte Maske in (nahe am Lichteintritt gelegenen) Bereichen schwacher Dämpfung eine geringere Durchlässigkeit zum Diffusorkörper aufweist als in (weiter vom Lichteintritt entfernten) Bereichen höherer Dämpfung. Dadurch wird eine entlang der Lichtausbreitungsrichtung besonders gleichförmige (das heißt. homogene) Leuchtdichte der Abstrahlfläche erzielt.

In einer weiteren Ausführungsform umfasst eine derartige Maske einen optisch opaken, bevorzugt feindispersen und/oder milchigen Hintergrund, welcher flächig über dem Lichtleiteraustritt angeordnet ist. Der optisch opake Hintergrund kann beispielsweise durch Beschichtung, Bedrucken oder Bekleben auf dem Lichtleiteraustritt aufgebracht sein. In dem optisch opaken Hintergrund sind optisch transparente Strukturelemente ausgespart oder eingearbeitet. Beispielsweise können optisch transparente Strukturelemente dadurch eingearbeitet werden, dass in dem zuerst flächig auf den Lichtleiteraustritt aufgebrachten optisch opaken Hintergrund mittels Laserabtrag bereichsweise Strukturelemente freigeschnitten werden.

Ein Vorteil dieser Ausführungsform besteht darin, dass durch einen feindispersen und/oder milchigen Hintergrund ein Teil des Lichtes entlang des Lichtleiteraustritts flächig verteilt wird. Dadurch werden die Homogenität der Leuchtdichte und die Ausbeute des über die Abstrahlfläche abgegebenen Lichtes verbessert.

In einer weiteren Ausführungsform ist eine Maske auf der vom Lichtleiteraustritt weg weisenden, entlang der Lichtausbreitungsrichtung erstreckten Grundfläche des Lichtleitkörpers angeordnet und mindestens teilweise in den Lichtleitkörper reflektierend ausgebildet. Bei einer solchen Maske sind auf einem nicht reflektierenden (beispielsweise transparenten oder absorbierenden) Hintergrund reflektierende Strukturelemente derart aufgebracht, dass die Reflektivität der Maske in den Lichtleitkörper entlang der Lichtausbreitungsrichtung zunimmt.

Bevorzugt sind auch diese Strukturelemente regelmäßig, beispielsweise kreisrund, geformt und, beispielsweise in einem Gitter, angeordnet. Jedoch nimmt bei diesem Ausführungsbeispiel mit auf der Grundfläche angeordneter Maske die Dichte der Strukturelemente in Lichtausbreitungsrichtung zu. Beispielhaft können in Lichtausbreitungsrichtung die Gitterabstände abnehmen und/oder die Durchmesser der Strukturelemente (beziehungsweise, bei nicht kreisrunden Strukturelementen, deren Flächen) zunehmen.

Durch eine solche reflektierende Maske wird eine in Lichtausbreitungsrichtung zunehmende Reflektivität der dem Lichtleitkörper zugewandten Maskenseite erreicht, die den Lichtverlust über die Grundfläche des Lichtleitkörpers in Lichtausbreitungsrichtung vermindert. Somit wird der Dämpfungsverlust bei der Lichtleitung im Lichtleitkörper kompensiert. Dadurch tritt eine über die Lichtausbreitungsrichtung nahezu konstante Lichtmenge vom Lichtleiteraustritt in den Diffusorkörper aus. Dadurch werden die Homogenität der Leuchtdichte und die Ausbeute des über die Abstrahlfläche abgegebenen Lichtes verbessert.

Bei einer Ausführungsform sind auf der Abstrahlfläche des Diffusorkörpers lineare, in Lichtausbreitungsrichtung erstreckte Fresnel - Strukturen derart eingearbeitet, dass der Diffusorkörper optisch als lineare (oder zylindrische) Fresnel - Linse wirkt. Dadurch wird die Homogenität des von der Abstrahlfläche emittierten Lichtes verbessert.

In einer Ausführungsform eines flexiblen Flächenlichtes ist der Lichtleiteraustritt gegenüber der Grundfläche derart geneigt, dass die Dicke des Diffusorkörpers über der Grundfläche in Lichtausbreitungsrichtung keilförmig abnimmt. Dadurch wird in einem nahe am Lichteintritt gelegenen Bereich ein größerer Anteil des in den Diffusorkörper eingekoppelten Lichtes diffus gestreut und ein kleinerer Anteil in dem über diesem Bereich gelegenen Abschnitt der Abstrahlfläche abgestrahlt als in einem Bereich, der weiter vom Lichteintritt entfernt gelegen ist. Somit wird die Dämpfung des am Lichteintritt in den Lichtleitkörper eingekoppelten Lichtes durch den keilartig verjüngten Diffusorkörper kompensiert und eine entlang der Lichtausbreitungsrichtung besonders homogene Leuchtdichte der Abstrahlfläche erzielt.

In einer Ausführungsform eines flexiblen Flächenlichtes sind der Lichtleiteraustritt und die Abstrahlfläche parallel zur Grundfläche angeordnet. Dadurch werden eine besonders kompakte Bauform und eine besonders große Abstrahlfläche ermöglicht.

In einer Ausführungsform eines flexiblen Flächenlichtes sind an dem Lichtleitkörper zwei einander gegenüberliegende Lichteintritte angeordnet. Durch einander gegenüberliegende Lichteintritte eingespeistes, entlang der Lichtausbreitungsrichtung gegenläufig gedämpftes Licht wird eine besonders gute Homogenität der Leuchtdichte über der Lichtausbreitungsrichtung erzielt.

In einer Ausführungsform umfasst ein flexibles Flächenlicht zusätzlich eine an dem mindestens einen Lichteintritt jeweils angeordnete, streifenförmig entlang der Querrichtung erstreckte flexible Leiterplatte mit mindestens einem Leuchtmittel sowie eine entlang der Querrichtung flexible Einkoppeloptik, die zur Einkopplung des von dem mindestens einen Leuchtmittel abgestrahlten Lichtes über den Lichteintritt in den Lichtleitkörper eingerichtet ist.

Durch die Verbindung der Lichtquelle mit dem Lichtleitkörper wird eine besonders kompakte Bauform erzielt, wobei durch die in Querrichtung flexible Leiterplatte und die streifenförmige, das heißt: in Lichtausbreitungsrichtung schmale Geometrie die Flexibilität des Flächenlichtes erhalten bleibt.

Bei einer Ausführungsform ragt der Diffusorkörper in Lichtausbreitungsrichtung über den Lichtleitkörper hinaus, so dass auch die flexible Leiterplatte mit dem mindestens einen Leuchtmittel von dem flexiblen Diffusorkörper abgedeckt ist. Dadurch kann die Lichtausbeute verbessert werden, indem auch Streulicht des mindestens einen Leuchtmittels, das nicht in den Lichtleitkörper eingekoppelt wird, von dem Diffusorkörper aufgenommen wird. Zudem wird die mechanische Festigkeit verbessert und die flexible Leiterplatte gegen Beschädigungen besser geschützt.

Bei einer Ausführungsform kann die flexible Leiterplatte so angeordnet werden, dass das Leuchtmittel (mit seiner Hauptabstrahlrichtung zum Lichtleitkörper weisend) auf der dem Diffusorkörper gegenüberliegenden Seite der flexiblen Leiterplatte liegt. Dadurch wird eine übermäßige Einkopplung von Streulicht in den Diffusorkörper vermieden, die zu Inhomogenitäten, insbesondere zu einer Aufhellung von Bereichen der Abstrahlfläche führen kann, die nahe am Leuchtmittel liegen. Bevorzugt ist dabei die flexible Leiterplatte aus lichtundurchlässigem Silikon gefertigt und/oder mit einer lichtundurchlässigen Schicht belegt.

Bei einer Ausführungsform sind der Lichtleitkörper, der Diffusorkörper, die flexible Leiterplatte mit dem mindestens einen Leuchtmittel und die flexible Einkoppeloptik in einer flexiblen Wanne angeordnet, wobei die Abstrahlfläche zur Öffnung der Wanne weist und wobei der Diffusorkörper die Wanne vollständig überdeckt. Durch eine derart gekapselte Anordnung wird ein mechanisch besonders robustes flexibles Flächenlicht gebildet.

Bei einer Ausführungsform eines flexiblen Flächenlichtes mit Leiterplatte und Leuchtmittel ist das mindestens eine Leuchtmittel als Leuchtdiode (LED) ausgebildet. Mit LEDs ist eine besonders energieeffiziente Erzeugung von Licht bei geringer Verlustwärme möglich, die für eine tragbare Leistungsversorgung besonders geeignet ist.

Bei einer Ausführungsform eines flexiblen Flächenlichtes mit Leiterplatte und Leuchtmittel ist die Einkoppeloptik als plankonvexe oder bikonvexe, mindestens entlang ihrer Längsrichtung flexible Zylinderlinse aus einem glasklaren Silikonmaterial ausgebildet und in ihrer Längsrichtung parallel zur Querrichtung zwischen dem mindestens einen Leuchtmittel und dem Lichteintritt angeordnet.

Mittels einer derartigen Zylinderlinse kann ein besonders großer Teil des Lichtes, das von einem Leuchtmittel, vorzugsweise von einer LED, unter einem großen Raumwinkel von nahezu 180 Grad emittiert wird, in den Lichtleitkörper eingekoppelt werden. Somit wird, unter Beibehaltung der Flexibilität des Flächenlichtes, dessen Energieeffizienz verbessert beziehungsweise die zur Ausleuchtung der Abstrahlfläche verfügbare Lichtausbeute erhöht. Es können somit besonders helle und zugleich energiesparende Flächenlichter bereitgestellt werden.

Bei einer Ausführungsform weist die Einkoppeloptik mindestens einen bildseitigen Brennpunkt oder eine bildseitige Brennlinie auf, der oder die innerhalb des Lichtkörpers angeordnet ist. Beispielsweise kann die Einkoppeloptik als in ihrer Längsrichtung flexible plankonvexe oder bikonvexe Zylinderlinse ausgebildet sein, entlang deren objektseitiger Brennlinie mindestens eine auf der Leiterplatte angebrachte LED angeordnet ist, wobei die bildseitige Brennlinie in dem Lichtkörper liegt. Alternativ kann die Einkoppeloptik als eine Zeile von in Querrichtung angeordneten plankonvexen oder bikonvexen Linsen ausgebildet sein, wobei jeweils in einem objektseitigen Brennpunkt einer solchen Linse ein Leuchtmittel (beispielsweise eine LED) angeordnet ist und wobei der bildseitige Brennpunkt jeder Linse im Lichtleitkörper liegt.

Durch die Anordnung eines Brennpunktes oder einer Brennlinie im Lichtleitkörper wird eine entlang der Lichtausbreitungsrichtung im Lichtleitkörper besonders hohe Lichtintensität im Bereich um den Brennpunkt beziehungsweise um die Brennlinie erreicht. Dadurch kann die in Lichtausbreitungsrichtung zunehmende Dämpfung kompensiert und eine besonders gute Homogenität (entlang der Lichtausbreitungsrichtung) der Leuchtdichte der Abstrahlfläche erreicht werden.

Bei einer Ausführungsform eines flexiblen Flächenlichtes ist auf die Abstrahlfläche mindestens bereichsweise ein Belag aufgebracht, der eine örtlich variierende Lichtdurchlässigkeit aufweist und/oder der bereichsweise lichtundurchlässig ausgebildet ist. Beispielsweise kann ein solcher Belag als auf die Abstrahlfläche aufgebrachte (beispielsweise aufgedruckte) Beschriftung ausgebildet sein. Dadurch kann eine visuelle Erscheinung oder ein visuell erkennbares Muster erzielt werden, das flächig weit ausgedehnt ist und besonders homogen hinterleuchtet erscheint.

Zusätzlich oder alternativ zu einer optischen (die Lichtdurchlässigkeit modulierenden) Funktion kann ein solcher, auf die Abstrahlfläche aufgebrachter Belag auch staubabweisend ausgebildet sein, um eine Beeinträchtigung des Lichtaustritts durch Verschmutzung zu vermeiden oder zu verringern. Das ist insbesondere vorteilhaft, weil aus dem Stand der Technik bekannte, für die Herstellung eines flexiblen Diffusorkörpers geeignete Materialien, namentlich Silikon, besonders anfällig für die Ablagerung von Staub und Schmutz sind. Ein derartiger Belag kann beispielsweise aus einem Anti-Friction-Silikon gebildet sein.

Bei einer Ausführungsform eines flexiblen Flächenlichtes ist mindestens eine Seitenfläche des Lichtleitkörpers und/oder des Diffusorkörpers und/oder die Grundfläche ins jeweilige Körperinnere mindestens teilweise reflektierend ausgebildet. Mit anderen Worten: Licht, das eine solche Seitenfläche oder die Grundfläche erreicht und andernfalls ungenutzt austreten würde, wird in den Lichtleitkörper beziehungsweise in den Diffusorkörper zurückgeleitet.

Dadurch kann die optische Effizienz, das heißt: der Anteil des über den Lichteintritt eingespeisten Lichtes, der über die Abstrahlfläche abgestrahlt wird, verbessert werden. So können besonders großflächige und/oder besonders helle Flächenlichter erzeugt werden. Ferner kann, indem die reflektierende Wirkung der Grundfläche über eine darauf aufgebrachte, teilweise reflektierende Maske entlang der Lichtausbreitungsrichtung moduliert wird, der Lichtverlust im Lichtleitkörper derart kompensiert werden, dass eine nahezu homogene Lichtauskopplung in den Diffusorkörper erzielt wird.

Bei einer Ausführungsform ist die Abstrahlfläche als lineare, in Querrichtung ausgerichtete Fresnel-Linse zur Kompensation einer in Lichtausbreitungsrichtung zunehmenden Lichtschwächung eingerichtet. Die Brechkraft einer solchen linearen Fresnel-Linse ändert sich in Querrichtung nicht. In der Lichtausbreitungsrichtung (senkrecht zur Querrichtung) ändert sich die Brechkraft dieser Fresnel-Linse derart, dass nahe am Lichteintritt ein vergleichsweise geringer Anteil des im Lichtleitkörper geleiteten Lichtes ausgekoppelt und abgestrahlt wird und entfernt vom Lichteintritt ein vergleichsweise hoher Anteil des im Lichtleitkörper geleiteten Lichtes ausgekoppelt wird. Dadurch wird der Lichtverlust im Lichtleitkörper derart kompensiert, dass eine nahezu homogene Lichtauskopplung in den Diffusorkörper erzielt wird.

Bei einer Ausführungsform ist die Grundfläche ins Innere des Lichtleitkörpers strukturiert reflektierend und/oder glitzernd ausgebildet. Dadurch kann eine besonders auffällige und/oder attraktive visuelle Erscheinung des hinterleuchteten Flächenlichtes erreicht werden.

In einer Ausführungsform ist ein flexibles Flächenlicht waschbar und/oder sterilisierbar ausgebildet. Derart ausgebildete Flächenlichte sind für den Einsatz an Kleidungsstücken oder anderen, besonders exponierten oder strapazierten flexiblen Materialien geeignet.

Eine textile Flächenkonstruktion weist erfindungsgemäß ein flexibles Flächenlicht auf, das mit der Grundfläche des Lichtleitkörpers auf der textilen Flächenkonstruktion derart versatzfest verbunden, insbesondere gegen Verrutschen oder Ablösen gesichert ist, dass die textile Flächenkonstruktion mit dem darauf angeordneten flexiblen Flächenlicht flexibel bleibt. Bevorzugt ist die Grundfläche des Lichtleitkörpers oder die Grundfläche einer den Lichtleitkörper wie bereits beschrieben umfassenden Wanne mit der textilen Flächenkonstruktion adhäsiv verbunden, besonders bevorzugt verklebt und/oder verschweißt.

Derartige textile Flächenkonstruktionen können überall dort eingesetzt werden, wo Flexibilität (Biegsamkeit, Zusammenfalten oder Zusammenlegen der textilen Flächenkonstruktion) erforderlich ist und zugleich eine flächige, durch aktive Beleuchtung umgebungslichtunabhängig herstellbare, homogene Leuchtdichte gewünscht wird. Beispielsweise können sich derartige textile Flächenkonstruktionen an unregelmäßig geformte Bauteile oder Baukörper anschmiegen und mit visuell markanten Mustern, Schriften oder Zeichen versehen werden.

Ein Kleidungsstück aus mindestens bereichsweise flexiblem Material weist erfindungsgemäß auf einer Außenfläche ein flexibles Flächenlicht auf, welches mit der Grundfläche seines Lichtleitkörpers oder mit der Grundfläche seiner den Lichtleitkörper wie bereits beschrieben umfassenden Wanne mit dem Kleidungsstück versatzfest, vorzugsweise adhäsiv derart verbunden ist, dass das Kleidungsstück in einem von dem flexiblen Flächenlicht überdeckten Bereich aus einem flexiblen Material flexibel ist.

Mit dem aufgesetzten flexiblen Flächenlicht lassen sich Kleidungsstücke mit aktiv leuchtenden funktionellen Beleuchtungselementen gestalten, beispielsweise weithin sichtbare Warn- oder Erkennungszeichen. Es ist aber mit der großflächigen homogenen Hinterleuchtung durch die Abstrahlfläche eines solchen aufgesetzten flexiblen Flächenlichtes auch möglich, Kleidung mit völlig neuartigen modischen Dessins zu entwerfen und kostengünstig herzustellen.

Ausführungsbeispiele der Erfindung werden im Folgenden anhand von Zeichnungen näher erläutert. Darin zeigen:
- Figur 1A und Figur 1B: schematisch einen Längsschnitt durch ein flexibles Flächenlicht mit einem Lichteintritt,
- Figur 2: schematisch einen Längsschnitt durch ein flexibles Flächenlicht mit zwei gegenüberliegenden Lichteintritten,
- Figur 3: schematisch eine perspektivische Ansicht eines flexiblen Flächenlichtes,
- Figur 4: schematisch eine Maske für die Beschichtung eines Lichtleitkörpers,
- Figur 5: schematisch eine flexible Leiterplatte mit einer Einkoppeloptik sowie
- Figur 6A und Figur 6B: schematisch die Struktur einer Abstrahlfläche eines Diffusorkörpers in einer Ansicht von oben beziehungsweise von der Seite.

Einander entsprechende Teile sind in allen Figuren mit den gleichen Bezugszeichen versehen.

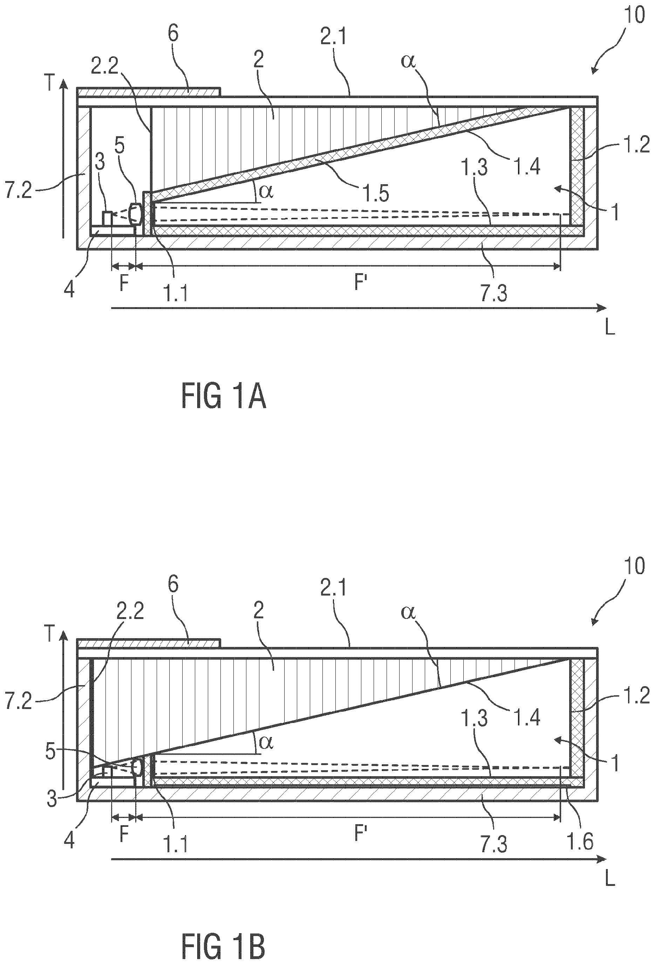

**Figur 1A** zeigt schematisch einen Längsschnitt durch ein flexibles Flächenlicht 10.

Das Flächenlicht 10 umfasst einen Lichtleitkörper 1 mit einem entlang einer Lichtausbreitungsrichtung L keilförmig zunehmendem Querschnitt und einen darüber angeordneten Diffusorkörper 2 mit einem entlang der Lichtausbreitungsrichtung L komplementär keilförmig abnehmendem Querschnitt. Der Lichtleitkörper 1 und der Diffusorkörper 2 sind entlang einer Lichtausbreitungsrichtung L und entlang einer senkrecht dazu liegenden Querrichtung Q flächig ausgedehnt und flexibel, vorzugsweise biegbar, ausgebildet.

Der Lichtleitkörper 1 ist aus optisch transparentem, glasklarem und flexiblem Kernmaterial mit einem ersten Brechungsindex n1 ausgebildet. Vorzugsweise ist der Lichtleitkörper 1 aus glasklarem Silikon gefertigt.

Der Diffusorkörper 2 ist aus diffus streuendem, flexiblem Material ausgebildet. Vorzugsweise ist der Diffusorkörper 2 aus transparent-trübem Silikon ausgebildet. Transparent-trübes Silikon kann durch gezielte Verunreinigung von Silikon leicht hergestellt werden.

Der Lichtleitkörper 1, der Diffusorkörper 2 sowie eine nachfolgend noch genauer erklärte streifenartige Leiterplatte 4 und eine Einkoppeloptik 5 sind in einer flexiblen Wanne 7 mit Seitenflächen 7.2 und einer Grundfläche 7.3 eingehaust. Die flexible Wanne 7 kann beispielsweise auch aus Silikon gefertigt sein.

Die Öffnung der Wanne 7 ist mit einer optisch transparenten, glasklaren Abstrahlfläche 2.1 dicht abgeschlossen, welche auf dem Diffusorkörper 2 sowie auf den Seitenflächen 7.2 der Wanne 7 aufliegt. Bevorzugt sind Hohlräume, welche nach dem Einfügen des Lichtleitkörpers 1, des Diffusorkörpers 2 und optional weiterer Bauelemente innerhalb der Wanne 7 verbleiben, mit transparentem, glasklarem Silikon vergossen werden, so dass nach dem Vergießen die Wanne 7 und deren Inneres ein kompaktes, flexibles Bauteil bilden.

Wie in Figur 1A dargestellt, weist der Lichtleitkörper 1 an seinem schmalen vorderen Ende einen Lichteintritt 1.1 und an dem entlang der Lichtausbreitungsrichtung L gegenüberliegenden breiten hinteren Ende eine hintere Seitenfläche 1.2 auf. Der Lichteintritt 1.1 ist zur Einkopplung von Licht, vorzugsweise von sichtbarem Licht, eingerichtet.

Ferner weist der Lichtleitkörper 1 eine untere Grundfläche 1.3 auf, die sich parallel zur Lichtausbreitungsrichtung L erstreckt. Der unteren Grundfläche 1.3 gegenüberliegend ist in der dargestellten Ausführungsform ein Lichtleiteraustritt 1.4 gegenüber der unteren Grundfläche 1.3 mit einem Keilwinkel α leicht keilförmig geneigt angeordnet, so dass die Tiefe (oder die Dicke) des Lichtleitkörpers 1, die entlang einer zur Lichtausbreitungsrichtung L und zur Querrichtung Q senkrechten Tiefenrichtung T, vom Lichteintritt 1.1 zur hinteren Seitenfläche 1.2 hin zunimmt.

Es ist jedoch auch eine Ausführungsform möglich, bei der der Lichtleiteraustritt 1.4 planparallel zur unteren Grundfläche 1.3 angeordnet ist (bei der also der Keilwinkel α Null ist).

Der Lichtleitkörper 1 ist vollflächig, also entlang des Lichteintritts 1.1, der Seitenflächen 1.2, der Grundfläche 1.3 und des Lichtleiteraustritts 1.4 mit einer Mantelschicht 1.5 beschichtet und ummantelt.

Entlang des beschichteten Lichtleiteraustritts 1.4 sind der Lichtleitkörper 1 und der Diffusorkörper 2 derart verbunden, beispielsweise verklebt oder verschweißt, dass sie gemeinsam eine quaderartige Kubatur bilden. Somit nimmt entlang der Lichtausbreitungsrichtung L die Dicke des Diffusorkörpers 2 in gleichem, durch den Keilwinkel α bestimmtem Maß ab wie die Dicke des Lichtleitkörpers 1 zunimmt.

Ein Teil des im Diffusorkörper 2 gestreuten Lichtes tritt, wenn keine weiteren Maßnahmen getroffen werden, an dessen Seitenflächen 2.2 sowie an den Seitenflächen 1.2 und der unteren Grundfläche 1.3 des Lichtleitkörpers 1 aus und würde somit ohne weitere Gegenmaßnahme für eine Abstrahlung über die Abstrahlfläche 2.1 verloren gehen.

Zur Vermeidung dieser Lichtverluste sind in einer Ausführungsform die innen liegenden Seiten der Seitenflächen 7.2 und Grundfläche 7.3 der flexiblen Wanne 7 reflektierend ausgebildet, beispielsweise verspiegelt oder totalreflektierend beschichtet, so dass Lichtstrahlen in den Diffusorkörper 2 beziehungsweise in den Lichtleitkörper 1 zurückgeworfen werden.

Wie nachfolgend noch erklärt wird, strahlt die Abstrahlfläche 2.1 das in den Diffusorkörper 2 eingekoppelte Licht näherungsweise homogen ab. Auf die Abstrahlfläche 2.1 kann, um einen erwünschten visuellen Eindruck zu erzeugen, ein Belag 6 aufgebracht sein.

Beispielsweise können Bereiche der Abstrahlfläche 2.1 durch den Belag 6 lichtundurchlässig abgedeckt sein. DerBelag 6 kann beispielsweise als textile Beschichtung oder Folienbeschichtung aufgebracht, beispielsweise aufgeklebt oder aufgedampft sein. Auf diese Weise ist es möglich, Muster oder bildliche oder textliche Darstellungen visuell durch eine Hintergrundbeleuchtung hervorzuheben.

Ein Belag 6 kann eine optische Wirkung aufweisen, beispielsweise in der Art einer Blende bereichsweise lichtundurchlässig sein. Eine optische Wirkung kann auch durch eine ortsabhängig unterschiedliche (das heißt: den Lichtaustritt modulierende) Lichtdurchlässigkeit erzielt werden. Alternativ oder zusätzlich kann der Belag 6 staubabweisend ausgebildet sein. Beispielsweise kann ein staubabweisender, optisch transparenter Belag 6 die gesamte Abstrahlfläche 2.1 abdecken, um eine Beeinträchtigung des Lichtaustritts durch Verschmutzung zu vermeiden oder zu vermindern.

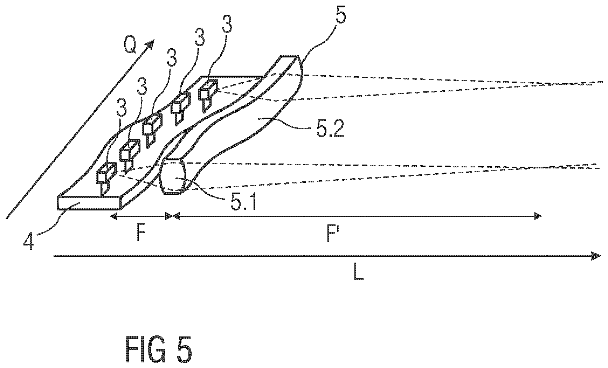

Das zur Einkopplung in den Lichteintritt 1.1 vorgesehene Licht wird von Leuchtdioden (LEDs) 3 erzeugt, die entlang der Querrichtung Q zeilenartig auf der streifenartigen Leiterplatte 4 angeordnet sind. Die Leiterplatte 4 erstreckt sich parallel zur unteren Grundfläche 1.3 des Lichtleitkörpers 1, wobei die Längsausdehnung der Leiterplatte 4 in der Querrichtung Q angeordnet ist. Zwischen der Leiterplatte 4 und dem Lichteintritt 1.1 ist die Einkoppeloptik 5 mit einem objektseitigen Brennpunkt F und einem bildseitigen Brennpunkt F' angeordnet, die anhand der Figur 5 nachfolgend noch genauer erklärt wird. Bevorzugt ist die Leiterplatte 4 mit den darauf angeordneten LEDs 3 und der Einkoppeloptik 5 in der Wanne 7 mit optisch transparentem Silikon derart vergossen, dass oberhalb der Leiterplatte 4 bis zur Abstrahlfläche 2.1 kein Hohlraum verbleibt.

Der Belag 6 ist so angeordnet, dass eine direkte Abstrahlung Licht von den LEDs 3 durch die Abstrahlfläche 2.1 verhindert (abgeblendet) wird. Bevorzugt deckt der Belag 6 nicht nur den Teil der Abstrahlfläche 2.1 ab, der über den LEDs 3 und der Einkoppeloptik 5 liegt, sondern reicht bis über den eintrittsseitigen Rand des Diffusorkörpers 2 hinaus. Durch den Belag 6 werden dadurch solche Bereiche der Abstrahlfläche 2.1 abgedeckt, die eine sehr große Leuchtdichte aufweisen, weil der optische Pfad von den LEDs 3 dorthin keine oder eine nur sehr geringe Dämpfung aufweist. Dadurch wird die Homogenität der Leuchtdichte im sichtbaren (das heißt: nicht abgedeckten) Teil der Abstrahlfläche 2.1 verbessert.

**Figur 1B** zeigt eine alternative Ausführungsform, die sich von Figur 1A dahingehend unterscheidet, dass der Diffusorkörper 2 über den Lichtleitkörper 1 hinaus auch die flexible Leiterplatte 4 mit den LEDs 3 und die Einkoppeloptik 5 überdeckt. Dadurch werden die LEDs 3, die Leiterplatte 4 und die Einkoppeloptik 5 mechanisch gestützt und, insbesondere beim Biegen des flexiblen Flächenlichtes 10, geschützt. Zudem kann dadurch auch Licht, das von den LEDs 3 emittiert, jedoch nicht von der Einkoppeloptik 5 aufgenommen wird, in den Diffusorkörper 2 geleitet und somit die Lichtausbeute verbessert werden.

Ferner unterscheidet sich die hier dargestellte von der Ausführungsform nach Figur 1A dadurch, dass der Lichtleiteraustritt 1.4 nicht von einer Mantelschicht 1.5 überdeckt ist.

In dem vorliegend dargestellten Ausführungsbeispiel ist zwischen der unteren Grundfläche 1.3 des Lichtleitkörpers 1 und der Grundfläche 7.3 der flexiblen Wanne 7 eine Maske 1.6 angeordnet, mit der die Reflexion von Licht, das aus der Grundfläche 1.3 des Lichtleitkörpers 1 austritt, in den Lichtleitkörper 1 zurück gesteuert, insbesondere entlang der Lichtausbreitungsrichtung L moduliert wird. Wie nachfolgend noch genauer beschrieben wird, ist die Maske 1.6 so ausgebildet, dass nahe dem Lichteintritt 1.1 eine vergleichsweise geringe Reflexion erzielt wird, welche in Lichtausbreitungsrichtung L fortschreitend vergrößert wird. Dadurch wird eine (entlang der Lichtausbreitungsrichtung L) besonders hohe Homogenität des über den Lichtleiteraustritt 1.4 und weiter über die Abstrahlfläche 2.1 ausgekoppelten Lichtes erzielt.

In einer anderen Ausführungsform können die LEDs 3 auch, anders als in Figur 1B dargestellt, auf der unteren, zur Grundfläche 1.3 des Lichtleitkörpers 1 beziehungsweise zur Grundfläche 7.3 der Wanne 7 weisenden Seite der Leiterplatte 4 angeordnet sein, so dass die Leiterplatte 4 von den LEDs 3 emittiertes Streulicht gegenüber dem Diffusorkörper 2 mindestens teilweise abdeckt. Bevorzugt ist die Leiterplatte 4 dann lichtundurchlässig oder lichtdämpfend ausgebildet, beispielsweise mit einer lichtundurchlässigen Farbschicht belegt. Dadurch wird eine übermäßig starke Einkopplung von Streulicht in den Diffusorkörper 2 vermieden, die eine inhomogene (nahe den LEDs 3 erhöhte) Leuchtdichteverteilung über der Abstrahlfläche 2.1 verursachen könnte.

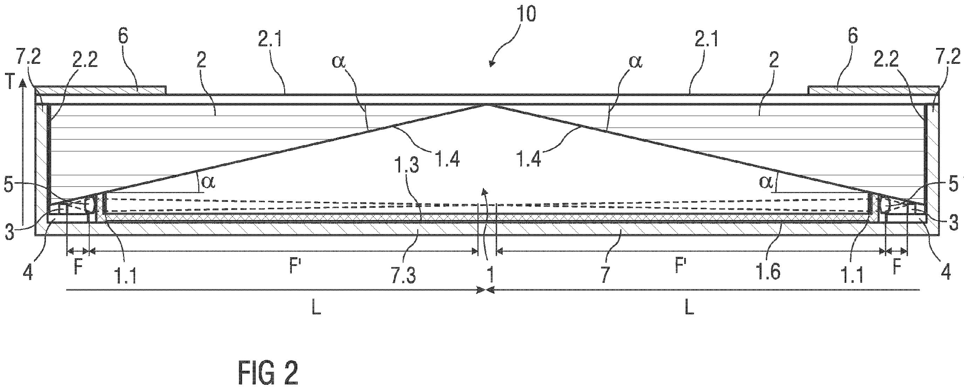

**Figur 2** zeigt eine alternative Ausführungsform mit zwei einander in Lichtausbreitungsrichtung L gegenüber liegenden Lichteintritten 1.1. Eine solche Ausführungsform weist den Vorteil auf, dass über die gesamte Abstrahlfläche 2.1 hinweg eine größere Homogenität der Leuchtdichte erzielt wird.

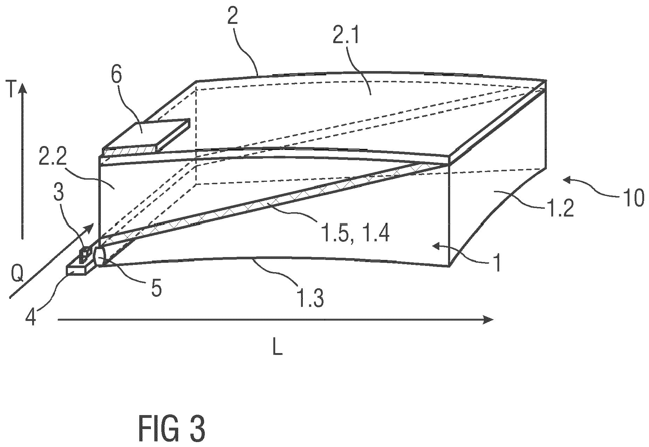

**Figur 3** zeigt schematisch eine perspektivische Ansicht auf ein Flächenlicht 10 umfassend einen Diffusorkörper 2 und einen Lichtleitkörper 1, an dem zusätzlich eintrittsseitig LEDs 3 angeordnet sind. In Figur 3 ist das Flächenlicht 10 entlang der Querrichtung Q und entlang der Lichtausbreitungsrichtung L leicht durchgebogen dargestellt, um Biegbarkeit und Flexibilität des Flächenlichtes 10 zu verdeutlichen. Zur besseren Sichtbarkeit der Lichteinkopplung wurde in der Darstellung der Figur 3 die einhausende flexible Wanne 7 weggelassen.

Mittels einer Einkoppeloptik 5 wird das von den LEDs 3 in einem breiten Abstrahlwinkel von nahezu 180 Grad emittierte Licht aufgefangen und im Lichtleitkörper 1 fokussiert. Dadurch wird eine hohe Ausbeute des von den LEDs 3 emittierten Lichtes erreicht. Im dargestellten Ausführungsbeispiel ist die Einkoppeloptik 5 als fokussierende Optik ausgebildet und so angeordnet, dass sich der objektseitige Brennpunkt F in der Ebene der Abstrahlflächen der LEDs 3 befindet und dass sich der bildseitige Brennpunkt F' im Lichtleitkörper 1 befindet.

Durch die streuende Wirkung des Diffusorkörpers 2 wird Licht, das vom Lichtleitkörper 1 über dessen Lichtleiteraustritt 1.4 in den Diffusorkörper 2 eingekoppelt wird, entlang des auf dem Diffusorkörper 2 aufliegenden Teils der Abstrahlfläche 2.1 verteilt. Jedoch ist bei Verwendung üblicher streuender Medien, die zudem flexibel sind, eine zufriedenstellende Homogenität entlang der Abstrahlfläche 2.1 noch nicht erzielbar.

Die Homogenität der Leuchtdichte entlang der Abstrahlfläche 2.1 kann in einer ersten Ausführungsform dadurch verbessert werden, dass auf den Lichtleiteraustritt 1.4 des Lichtleitkörpers 1 unterhalb der Mantelschicht 1.5 eine Maske 1.6 aufgebracht ist. Diese Maske 1.6 ist so ausgebildet, dass die Transmission von Licht aus dem Lichtleitkörper 1 in den Diffusorkörper 2 reduziert wird. Insbesondere ist die Maske 1.6 so ausgebildet, dass ihre Transmissivität entlang der Lichtausbreitungsrichtung L moduliert ist, beispielsweise zunimmt.

Alternativ kann eine solche Maske 1.6 nicht unterhalb der Mantelschicht 1.5, sondern zwischen der Grundfläche 1.3 des Lichtleitkörpers 1 und der Grundfläche 7.3 der Wanne 7 angeordnet sein.

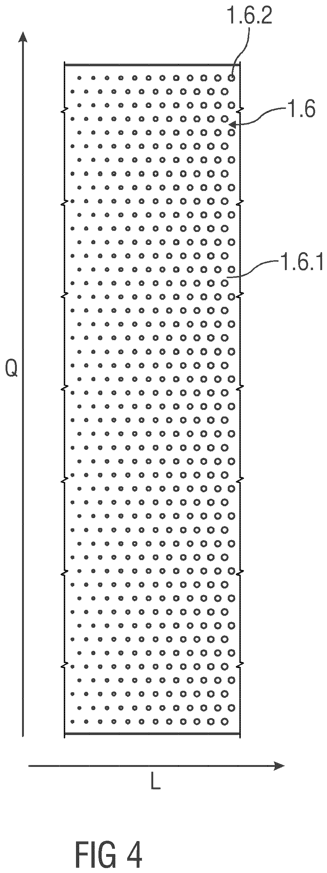

In einem in **Figur 4** dargestellten Ausführungsbeispiel weist die auf der Grundfläche 7.3 der Wanne 7 angeordnete Maske 1.6 in Richtung des Lichtleitkörpers 1 reflektierende Strukturelemente 1.6.2 auf, die auf einem lichtdurchlässigen Hintergrund 1.6.1 in regelmäßigen Abständen (das heißt: gitterartig) aufgebracht sind. Der lichtdurchlässige Hintergrund 1.6.1 kann von der Grundfläche 7.3 der Wanne 7 gebildet sein, indem die Strukturelemente 1.6.2 direkt auf die Grundfläche 7.3 aufgebracht, beispielsweise aufgedruckt werden. Es ist aber auch möglich, dass Strukturelemente 1.6.2 auf einen als lichtdurchlässige Folie ausgebildeten lichtdurchlässigen Hintergrund 1.6.1 aufgedruckt werden. Dann wird diese Folie 1.6.1 mit den aufgedruckten Strukturelementen 1.6.2 auf der Grundfläche 7.3 der Wanne 7 angebracht, beispielsweise aufgeklebt.

Die Strukturelemente 1.6.2 können, wie dargestellt, als Kreisscheiben ausgebildet sein. Es sind aber auch andere regelmäßige, vorzugsweise punktsymmetrische Strukturen möglich.

Die Strukturelemente 1.6.2 sind in regelmäßigen Abständen, jedoch in Richtung der Lichtausbreitungsrichtung L mit zunehmender Größe auf dem lichtdurchlässigen Hintergrund 1.6.1 aufgebracht. Dadurch wird erreicht, dass in einem Bereich nahe des Lichteintritts 1.1 (das heißt: nahe bei den in Figur 4 nicht näher dargestellten LEDs 3) ein vergleichsweise geringerer Anteil des durch die Grundfläche 1.3 des Lichtleitkörpers 1 austretenden Lichtes in den Lichtleitkörper 1 zurück reflektiert wird als in einem Bereich, der entlang der Lichtausbreitungsrichtung L weiter vom Lichteintritt 1.1 entfernt ist.

Mit anderen Worten: durch diese Struktur der Maske 1.6 bewirkt, nimmt deren Reflektivität bei dieser Ausführungsform entlang der Lichtausbreitungsrichtung L zu und kompensiert derart die entlang der Lichtausbreitungsrichtung L ebenfalls zunehmende Dämpfung des Lichtes im Lichtleitkörper 1, so dass ein insgesamt homogenes Leuchtdichteprofil der Abstrahlfläche 2.1 über der Lichtausbreitungsrichtung L entsteht. Die Reflektivität der Maske 1.6 kann optional mit einer Reflektivität der Grundfläche 7.3 kombiniert sein, die in Richtung des Lichtleitkörpers 1 ganz oder teilweise verspiegelt ausgebildet ist.

Auch andere Strukturierungen der Maske 1.6 sind möglich, beispielsweise gleich große, jedoch in entlang der Lichtausbreitungsrichtung L kleiner werdenden Abständen verteilte Strukturelemente 1.6.2. Die Maske 1.6 kann auf der Grundfläche 7.3 der Wanne 7 aufgedruckt oder mit einem Laserablationsverfahren appliziert werden.

Zusätzlich oder alternativ kann eine Maske 1.6 in einem in Figur 4 nicht näher dargestellten Ausführungsbeispiel auch zwischen dem Lichtleiteraustritt 1.4 und dem Diffusorkörper 2 angeordnet sein. Eine solche Maske 1.6 weist Strukturelemente 1.6.2 auf, die lichtundurchlässig sind und die mit einem in Lichtausbreitungsrichtung L abnehmenden Flächenanteil (bezogen auf den Hintergrund 1.6.1) angeordnet sind. Der entlang der Lichtausbreitungsrichtung L abnehmende Flächenanteil der lichtundurchlässigen (das heißt: nicht reflektierenden) Strukturelemente 1.6.2 bewirkt eine Kompensation der Schwächung des sich in Richtung der Lichtausbreitungsrichtung L im Lichtleitkörper 1 ausbreitenden Lichtes.

Nachteilig an dieser Ausführungsform der Erfindung ist die um die Absorption an den Strukturelementen 1.6.2 verminderte Lichtausbeute und damit einhergehend eine erhöhte Leistungsaufnahme der LEDs 3 sowie eine vergrößerte Abgabe von Verlustwärme.

Alternativ kann die Maske 1.6 auch dadurch hergestellt werden, dass auf den Lichtleiteraustritt 1.4 zunächst ein Hintergrund 1.6.1 als opake Beschichtung aufgebracht wird, welche anschließend im Bereich der Strukturelemente 1.6.2 abgetragen wird, beispielsweise mittels Laserbearbeitung. Die opake Beschichtung ist vorzugsweise feindispers oder milchig ausgebildet.

Dadurch wird erreicht, dass im Bereich des opaken Hintergrunds 1.6.1 die Transmissivität vom Lichtleiteraustritt 1.4 in den Diffusorkörper 2 vermindert wird, wobei ein Teil des hier aus dem Lichtleiteraustritt 1.4 austretenden Lichtes flächig verteilt wird. Dadurch können die Homogenität des über die Abstrahlfläche 2.1 austretenden Lichtes verbessert und der durch die Maske 1.6 bewirkte Lichtverlust vermindert werden.

In einer weiteren Ausführungsform ist zusätzlich oder alternativ zum Aufbringen einer Maske 1.6 (entweder gemäß Figur 4 für die Anordnung zwischen den Grundflächen 1.3, 7.3 des Lichtleitkörpers 1 und der Wanne 7 oder für die Anordnung zwischen dem Lichtleiteraustritt 1.4 und dem Diffusorkörper 2) eine den Lichtleitkörper 1 umhüllende Mantelschicht 1.5 aus einem Material ausgebildet, welches einen zweiten Brechungsindex n2 hat, der unter dem ersten Brechungsindex n1 des Kernmaterials des Lichtleitkörpers 1 liegt. Abhängig vom Verhältnis der Brechungsindizes n1/n2 wird ein gegenüber einem unbeschichteten Lichtleiteraustritt 1.4 vergrößerter Teil der Lichtstrahlen, die aus dem Kernmaterial des Lichtleitkörpers 1 auf den Lichtleiteraustritt 1.4 mit der Mantelschicht 1.5 auftreffen, ins Innere des Lichtleitkörpers 1 zurückgeworfen.

Die Mantelschicht 1.5 kann beispielsweise eine dünne, vorzugsweise nur wenige Mikrometer dicke Schicht aus Acrylmaterial sein. Es sind jedoch aus der Herstellung von schwach führenden Lichtwellenleitern auch andere Materialien bekannt, welche einen gegenüber dem Brechungsindex des Lichtleitkörpers 1, beispielsweise gegenüber dem Brechungsindex von Silikon ausreichend unterschiedlichen Brechungsindex aufweisen, um eine beträchtliche, jedoch unvollständige Totalreflexion am Lichtleiteraustritt 1.4 zu bewirken. Dadurch wird erreicht, dass das Licht in dem durch die Totalreflexion bestimmten Umfang im Lichtleitkörper 1 entlang der Lichtausbreitungsrichtung L fortgeleitet wird.

Der verbleibende (an der Mantelschicht 1.5 nicht total-reflektierte) Teil von Lichtstrahlen aus dem Lichtleitkörper 1 tritt in den Diffusorkörper 2 über und wird dort diffus gestreut. Ein Teil des im Diffusorkörper 2 gestreuten Lichtes wird über die Abstrahlfläche 2.1 direkt abgestrahlt, die zur unteren Grundfläche 1.3 näherungsweise planparallel angeordnet ist. Ein Teil des gestreuten Lichtes wird über die Mantelschicht 1.5 und den Lichtleiteraustritt 1.4 wieder in den Lichtleitkörper 1 zurück eingekoppelt.

Es hat sich herausgestellt, dass gegenüber einem planparallel zur Grundfläche 1.3 angeordneten Lichtleiteraustritt 1.4 des Lichtleitkörpers 1 die Homogenität des von der Abstrahlfläche 2.1 abgestrahlten Lichtes verbessert werden kann, wenn die Dicke des Lichtleitkörpers 1 vom Lichteintritt 1.1 zur hinteren Seitenfläche 1.2 hin zunimmt und entsprechend die Dicke des Diffusorkörpers 2 abnimmt.

Durch die geringere Dicke des Diffusorkörpers 2 am hinteren (dem Lichteintritt 1.1 gegenüber liegenden) Ende der Lichtausbreitungsrichtung L wird dort ein geringerer Teil der näherungsweise in der Tiefenrichtung T eingekoppelten Lichtstrahlen durch diffuse Streuung gedämpft. Dadurch kann die entlang der Lichtausbreitungsrichtung L zunehmende Dämpfung innerhalb des Lichtleitkörpers 1 kompensiert werden.

Bevorzugt ist die Einkoppeloptik 5 so ausgebildet, dass der bildseitige Brennpunkt F' des Strahlverlaufs durch die Einkoppeloptik 5 und den Lichtleitkörper 1 an dessen hinterem (dem Lichteintritt 1.1 gegenüber liegenden) Ende, nahe der hinteren Seitenfläche 1.2 liegt. Durch die Verlagerung des bildseitigen Brennpunkts F' entlang der Lichtausbreitungsrichtung L kann die Homogenität des über die Abstrahlfläche 2.1 austretenden Lichtes gesteuert werden.

Es hat sich herausgestellt, dass eine besonders hohe Homogenität, das heißt: eine entlang der Lichtausbreitungsrichtung L besonders wenig variierende Leuchtdichte, dann erzielt werden kann, wenn der bildseitige Brennpunkt F' der Einkoppeloptik 5 nahe der hinteren Seitenfläche 1.2 des Lichtleitkörpers 1 liegt. Besonders vorteilhaft wird die genaue Lage des bildseitigen Brennpunktes F' entlang der Lichtausbreitungsrichtung L abhängig von der Dämpfungswirkung der Materialien des Lichtleitkörpers 1 und des Diffusorkörpers 2 und/oder abhängig vom Keilwinkel α gewählt.

**Figur 5** zeigt schematisch die Anordnung der Leiterplatte 4 mit den LEDs 3 und der Einkoppeloptik 5 im Detail.

Die LEDs 3 sind auf der streifenförmigen Leiterplatte 4 in deren Längsrichtung zeilenartig so aufgesetzt, dass ihre Licht emittierenden Flächen in einer Ebene und senkrecht zur Leiterplatte 4 ausgerichtet sind. Dadurch wird erreicht, dass von den LEDs 3 emittiertes Licht über die Einkoppeloptik 5 in den Lichtleitkörper 1 eingekoppelt wird, wenn die Leiterplatte 4 koplanar zur Grundfläche 1.3 des Lichtleitkörpers 1 angeordnet ist, wobei die Abstrahlfläche der LEDs 3 auf die Einkoppeloptik 5 ausgerichtet ist.

Somit kann die flexible Leiterplatte 4 mit dem Lichtleitkörper 1 derart verbunden werden, dass das Flächenlicht 10 entlang der Querrichtung Q flexibel ist und dass sich bei einer Biegung des Flächenlichtes 10 entlang der Querrichtung Q die relative Lage und Ausrichtung der LEDs 3 gegenüber dem Lichteintritt 1.1 nicht oder nur geringfügig ändert.

Die Einkoppeloptik 5 ist als bikonvexe Stab- oder Zylinderlinse 5 ausgebildet, die aus einem flexiblen Material, beispielsweise aus Silikon besteht. Sie weist eine vordere konvexe Fläche 5.1 und eine hintere konvexe Fläche 5.2 auf. Die vordere konvexe Fläche 5.1 weist zu den Abstrahlflächen der LEDs 3. Die hintere konvexe Fläche 5.2 weist zu dem in Figur 5nicht näher dargestellten Lichteintritt 1.1 des Lichtleitkörpers 1. Die Längsrichtung der Zylinderlinse 5 ist näherungsweise parallel zur Querrichtung Q des Lichtleitkörpers 1 ausgerichtet, jedoch ist in Figur 5 die Flexibilität der Zylinderlinse 5 dadurch angedeutet, dass sie entlang dieser Querrichtung Q (also entlang ihrer eigenen Längsrichtung) leicht gebogen dargestellt ist.

Die Leiterplatte 4 mit den aufgesetzten LEDs 3 sowie die Zylinderlinse 5 sind mit dem Lichtleitkörper 1 verbunden, beispielsweise verklebt und/oder vergossen und aufgrund ihrer Flexibilität in der Querrichtung Q biegbar. Dadurch bleibt die Flexibilität des Lichtleitkörpers 1 erhalten. Zugleich bleiben, da die Leiterplatte 4 mit den LEDs 3 und auch die flexible Zylinderlinse 5 eine Biegung des Lichtleitkörpers 1 in der Querrichtung Q mit vollziehen, die optischen Pfade des von den LEDs 3 emittierten und in den Lichtleitkörper 1 eingekoppelten Lichtes näherungsweise unverändert. Somit bleiben die Helligkeit und die Homogenität der Abstrahlfläche 2.1 auch bei einer Biegung des Flächenlichtes 10 näherungsweise konstant.

In einer Ausführungsform der Erfindung ist die Grundfläche 1.3 des Lichtleitkörpers 1 mit einer strukturierten reflektierenden Schicht versehen, welche ortsabhängig unterschiedlich gut reflektiert. Dadurch kann die ansonsten homogene Leuchtdichte der Abstrahlfläche 2.1 moduliert werden. Beispielsweise können einzelne Bereiche der Abstrahlfläche 2.1 stärker leuchtend hervorgehoben oder abgeschwächt werden.

Beispielsweise ist es dadurch möglich, bestimmte Teile eines auf die Abstrahlfläche 2.1 aufgebrachten Belags 6 stärker zu hinterleuchten als andere Teile oder die Begrenzung eines über der Abstrahlfläche 2.1 angeordneten, bereichsweise lichtundurchlässigen Belags 6 stärker hervorzuheben. Dadurch können visuell attraktive, die Aufmerksamkeit anziehende Effekte erzeugt werden.

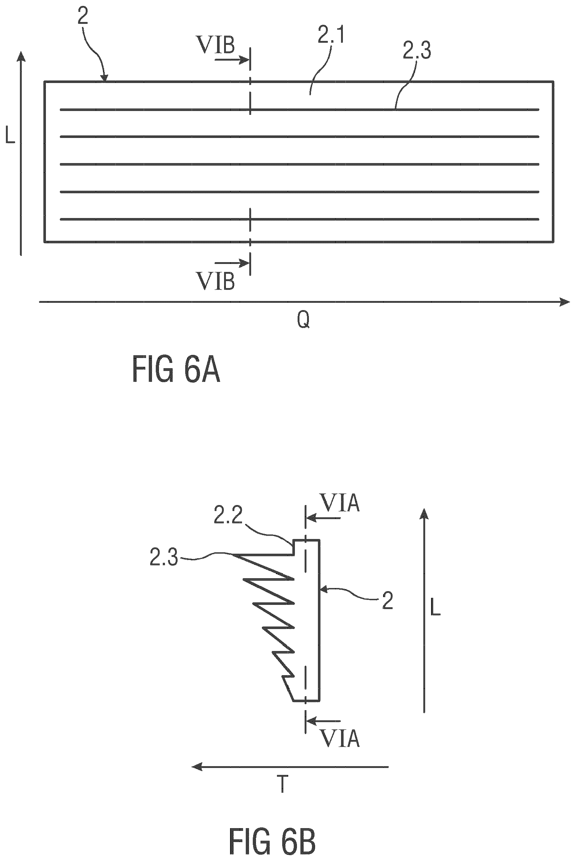

**Figur 6A** zeigt schematisch eine Draufsicht auf eine Abstrahlfläche 2.1 eines Diffusorkörpers 2, in welche lineare Fresnelstrukturen 2.3 eingebracht sind, deren Profil in der seitlichen Ansicht von **Figur 6B** genauer dargestellt ist. Die Fresnelstrukturen 2.3 verlaufen kollinear in Querrichtung Q, das heißt: senkrecht zur Lichtausbreitungsrichtung L.

Sie sind in ihrem Profil, das heißt: in ihrer Ausdehnung in Tiefenrichtung T, entlang der Lichtausbreitungsrichtung L sägezahnartig geformt, wobei jeder einzelnen der kollinearen Fresnelstrukturen 2.3 im Profil ein Sägezahn entspricht. Vorteilhaft werden die kollinearen Fresnelstrukturen 2.3 mit entlang der Lichtausbreitungsrichtung L zunehmenden Steilheit des Sägezahnprofils ausgeformt.

Dadurch kann eine in Lichtausbreitungsrichtung L zunehmende optische Bündelungswirkung erreicht werden. Mit anderen Worten: eine nahe am Lichteintritt 1.1 liegende Fresnelstruktur 2.3 koppelt einen geringeren Lichtanteil aus dem Diffusorkörper 2 aus als eine in Lichtausbreitungsrichtung L weiter entfernt liegende Fresnelstruktur 2.3. Dadurch wird die Lichtschwächung in Lichtausbreitungsrichtung L kompensiert und eine besonders hohe Homogenität des von der Abstrahlfläche 2.1 emittierten Lichtes erreicht.

### BEZUGSZEICHENLISTE

- 1: Lichtleitkörper
- 1.1: Lichteintritt
- 1.2: Seitenfläche, Fläche
- 1.3: Grundfläche, Fläche
- 1.4: Lichtleiteraustritt
- 1.5: Mantelschicht
- 1.6: Maske
- 1.6.1: Hintergrund, Folie
- 1.6.2: Strukturelement
- 2: Diffusorkörper
- 2.1: Abstrahlfläche
- 2.2: Seitenfläche, Fläche
- 2.3: Fresnelstruktur
- 3: Leuchtdiode / LED
- 4: Leiterplatte
- 5: Einkoppeloptik, Zylinderlinse
- 5.1: vordere konvexe Fläche
- 5.2: hintere konvexe Fläche
- 6: Belag
- 7: Wanne
- 7.2: Seitenfläche
- 7.3: Grundfläche
- 10: Flächenlicht

- α: Keilwinkel
- F: objektseitiger Brennpunkt
- F': bildseitiger Brennpunkt
- L: Lichtausbreitungsrichtung
- Q: Querrichtung
- T: Tiefenrichtung

## Patentansprüche

1. Flexibles, zur Anordnung auf einem flexiblen Material eingerichtetes Flächenlicht (10) umfassend einen flexiblen Lichtleitkörper (1), der über einer Grundfläche (1.3) ausgedehnt ist, die sich entlang einer Lichtausbreitungsrichtung (L) und entlang einer Querrichtung (Q) erstreckt, sowie einen vom Lichtleitkörper (1) getrennten und darüber angeordneten flexiblen, optisch diffus streuenden Diffusorkörper (2) mit einer Abstrahlfläche (2.1), wobei
- der Lichtleitkörper (1) zur Lichtleitung von mindestens einem entlang der Querrichtung (Q) erstreckten Lichteintritt (1.1) zu einem Lichtleiteraustritt (1.4) eingerichtet ist, der zwischen der Grundfläche (1.3) und der Abstrahlfläche (2.1) ausgedehnt ist, und
- wobei der Diffusorkörper (2) zur Aufnahme und zur diffusen Streuung des aus dem Lichtleiteraustritt (1.4) austretenden Lichtes und zur Abgabe des diffus gestreuten Lichtes über die Abstrahlfläche (2.1) eingerichtet ist, und
- wobei der Lichtleitkörper (1) mit einer austrittsseitig und/oder an der Grundfläche (1.3) angeordneten Maske (1.6) versehen ist, die für eine Kompensation der entlang der Lichtausbreitungsrichtung (L) im Lichtleitkörper (1) bewirkten Schwächung des an dem mindestens einen Lichteintritt (1.1) eingekoppelten Lichtes eingerichtet ist oder sind.

2. Flexibles Flächenlicht (10) nach Anspruch 1, **dadurch gekennzeichnet, dass** der Lichtleitkörper (1) aus glasklarem Silikonmaterial und der Diffusorkörper (2) aus diffus-trübem Silikonmaterial gebildet sind.

3. Flexibles Flächenlicht (10) nach Anspruch 1 oder 2, **dadurch gekennzeichnet, dass** eine austrittsseitig auf dem Lichtleitkörper (1) angeordnete mindestens teilweise transparente Mantelschicht (1.5) aus einem optisch dünneren Material besteht als der Lichtleitkörper (1), wobei das Verhältnis des Brechungsindex n2 der Mantelschicht (1.5) zum Brechungsindex n1 des Lichtleitkörpers (1) so gewählt ist, dass das aus dem Lichtleitkörper (1) auf den Lichtleiteraustritt (1.4) auftreffende Licht teilweise in den Diffusorkörper (2) eingekoppelt wird und teilweise in den Lichtleitkörper (1) zurück totalreflektiert wird.

4. Flexibles Flächenlicht (10) nach einem der vorhergehenden Ansprüche, **dadurch gekennzeichnet, dass** auf dem Lichtleiteraustritt (1.4) eine Maske (1.6) derart angeordnet ist, dass die Transmissivität vom Lichtleiteraustritt (1.4) in den Diffusorkörper (2) entlang der Lichtausbreitungsrichtung (L) zunimmt.

5. Flexibles Flächenlicht (10) nach einem der vorhergehenden Ansprüche, **dadurch gekennzeichnet, dass** auf der Grundfläche (1.3) des Lichtleitkörpers (1) eine mindestens teilweise in Richtung des Lichtleitkörpers (1) reflektierende Maske (1.6) derart angeordnet ist, dass die Reflektivität in den Lichtleitkörper (1) entlang der Lichtausbreitungsrichtung (L) zunimmt.

6. Flexibles Flächenlicht (10) nach einem der vorhergehenden Ansprüche, **dadurch gekennzeichnet, dass** der Lichtleiteraustritt (1.4) gegenüber der Grundfläche (1.3) derart geneigt ist, dass die Dicke des Diffusorkörpers (2) über der Grundfläche (1.3) in Lichtausbreitungsrichtung (L) keilförmig abnimmt.

7. Flexibles Flächenlicht (10) nach einem der vorhergehenden Ansprüche, **dadurch gekennzeichnet, dass** an dem Lichtleitkörper (1) zwei einander gegenüberliegende Lichteintritte (1.1) angeordnet sind.

8. Flexibles Flächenlicht (10) nach einem der vorhergehenden Ansprüche, zusätzlich umfassend eine am Lichteintritt (1.1) jeweils angeordnete, streifenförmig entlang der Querrichtung (Q) erstreckte flexible Leiterplatte (4) mit mindestens einem Leuchtmittel (3) und eine entlang der Querrichtung (Q) flexible Einkoppeloptik (5), die zur Einkopplung des von dem mindestens einen Leuchtmittel (3) abgestrahlten Lichtes über den Lichteintritt (1.1) in den Lichtleitkörper (1) eingerichtet ist.

9. Flexibles Flächenlicht (10) nach Anspruch 8, **dadurch gekennzeichnet, dass** der Lichtleitkörper (1), der Diffusorkörper (2), die flexible Leiterplatte (4) mit dem mindestens einen Leuchtmittel (3) und die flexible Einkoppeloptik (5) in einer flexiblen Wanne (7) angeordnet sind, wobei die Abstrahlfläche (2.1) zur Öffnung der Wanne (7) weist und wobei der Diffusorkörper (2) die Wanne (7) vollständig überdeckt.

10. Flexibles Flächenlicht (10) nach einem der Ansprüche 8 oder 9, **dadurch gekennzeichnet, dass** die Einkoppeloptik (5) als plankonvexe oder bikonvexe, mindestens entlang ihrer Längsrichtung flexible Zylinderlinse (5) aus einem glasklaren Silikonmaterial ausgebildet ist und in ihrer Längsrichtung parallel zur Querrichtung (Q) zwischen dem mindestens einen Leuchtmittel (3) und dem Lichteintritt (1.1) angeordnet ist.

11. Flexibles Flächenlicht (10) nach einem der vorhergehenden Ansprüche, **dadurch gekennzeichnet, dass** auf die Abstrahlfläche (2.1) mindestens bereichsweise ein Belag (6) aufgebracht ist, der eine örtlich variierende Lichtdurchlässigkeit aufweist und/oder der staubabweisend ausgebildet ist.

12. Flexibles Flächenlicht (10) nach einem der vorhergehenden Ansprüche, **dadurch gekennzeichnet, dass** mindestens eine Seitenfläche (1.2, 2.2) des Lichtleitkörpers (1) und/oder des Diffusorkörpers (2) und/oder die Grundfläche (1.3) ins jeweilige Körperinnere mindestens teilweise reflektierend ausgebildet sind/ist.

13. Flexibles Flächenlicht (10) nach einem der vorhergehenden Ansprüche, **dadurch gekennzeichnet, dass** die Abstrahlfläche (2.1) als in Querrichtung (Q) linear ausgerichtete Fresnel-Linse zur Kompensation einer in Lichtausbreitungsrichtung (L) zunehmenden Lichtschwächung eingerichtet ist.

14. Textile Flächenkonstruktion mit einem flexiblen Flächenlicht (10) nach einem der Ansprüche 9 bis 13, wobei das flexible Flächenlicht (10) mit der Grundfläche (7.3) der Wanne (7) auf dem textilen Gewebe derart versatzfest verbunden, vorzugsweise adhäsiv verbunden ist, dass das textile Gewebe mit dem darauf angeordneten flexiblen Flächenlicht (10) flexibel ist.

15. Kleidungsstück aus einem mindestens bereichsweise flexiblen Material, wobei auf einer Außenfläche des Kleidungsstücks ein flexibles Flächenlicht (10) nach einem der Ansprüche 9 bis 13 mit der Grundfläche (7.3) der Wanne (7) derart versatzfest angeordnet, vorzugsweise mit dem Kleidungsstück adhäsiv verbunden ist, dass das Kleidungsstück in einem von dem flexiblen Flächenlicht (10) überdeckten Bereich aus einem flexiblen Material flexibel ist.
